# EUROPEAN PATENT APPLICATION

(11) **EP 1 249 835 A2**
(43) Date of publication of application: **16.10.2002**
(21) Application number: 02008104.8
(22) Date of filing: 10.04.2002
(51) Int. Cl.: G11B 19/04, G11B 20/00

(54) **Video signal recording method, video signal reproduction method, video signal recording apparatus, video signal reproducing apparatus, and video signal recording medium**

(30) Priority: 10.04.2001 JP 2001111100
(71) Applicant: VICTOR COMPANY OF JAPAN, LIMITED, Yokohama-Shi Kanagawa-Ken 221 (JP)
(72) Inventor: Sugahara, Takayuki, Yokosuka-shi, Kanagawa-ken (JP)
(74) Representative: HOFFMANN - EITLE

(57) **Abstract**

Contents are divided into a plurality of parts of the contents with a predetermined time interval, thereby to form a plurality of pieces of divided-contents information. For each piece of the divided-contents information, header information is generated which includes a pointer that shows a record starting position, permission flag information relating to watching or erasing of the contents, and password information for obtaining a permission of a decoding or an erasing. The plurality of pieces of divided-contents information and the corresponding plurality of pieces of header information are recorded onto the same recording medium. From this recording medium, it is possible to reproduce or erase the divided-contents information of which reproduction or erasing is permitted by the permission flag information, and the divided-contents information of which reproduction or erasing is prohibited by the permission flag information but for which the password of the contents and a user input password coincide with each other.

## Description

### BACKGROUND OF THE INVENTION

### 1. Field of the Invention

The present invention relates to a video signal recording method for recording information onto a recording medium, a video signal reproduction method for reproducing information from a recording medium, a video signal recording apparatus which records information onto a recording medium, a video signal reproducing apparatus which reproduces information from a recording medium, and a recording medium which stores video signals. Particularly, the invention relates to an optical disc, a video data editing apparatus, a recording medium recorded with a computer-readable edit program, an optical disc reproducing apparatus, and a recording medium recorded with a computer-readable reproduction program.

### 2. Description of the Related Art

Conventionally, VCRs that use videotapes have been used to record video signals. Further, recently, along the increase in the recording capacities of an HDD (hard disc drive) and a DVD-RAM (Random Access Memory type Digital Versatile Disc) that can make random access, disc recorders that use such disc-shaped recording media have come to be used for practical application.

These disc recorders record contents of information obtained by encoding information based on an encoding method prescribed by the MPEG (moving-picture experts group), for example, onto a disc recording medium, and reproduce the contents. These disc recorders have a characteristic that it is possible to simultaneously carry out a plurality of operations of a recording and a reproduction of information onto/from the recording medium with excellent random access. A plurality of users can use these disc recorders.

For example, a recording/reproducing apparatus that uses this disc-recording medium is installed at the center of a house, and this apparatus is used as a home server. Each house member can record and reproduce video signals to/from this home server.

When a common recording/reproducing apparatus is used among a plurality of persons like this, it is necessary to prevent a video signal recorded in this apparatus from being erased or watched by other persons. In order to protect the recorded contents from being erased or watched, there is considered a method of assigning a recorded program (contents) and using a password number for each part of the assigned contents.

According to a contents management method that divides contents and executes an encryption processing to the divided contents, a header signal is provided to each part of the divided contents, and flag information of encryption/non-encryption is added to the header signal. The header signals are recorded together with the divided contents onto a recording medium.

According to a content reproduction method that divides contents , records the divided contents by adding header signals to the divided contents, and reproduces the contents based on the header signals, it is possible to carry out the following operation. For example, when a plurality of programs are recorded as recorded contents, list information is used to manage each program as a divided part of the contents. Based on this list information, it is possible to watch videos by using signals that have been recorded on a single recording medium, without copying or rewriting again the program data information recorded on the recording medium or a database. This video reproduction method is similar to a method that is used in a video editing apparatus.

According to a video editing method that is similar to the above video reproduction method, a file that stores contents data as a plurality of programs is prepared. Also, reproduction list information is generated that assigns a reproduction procedure by combining pointer information that shows a starting point and an ending point based on the assignment of a plurality of parts of the contents data. Video signals generated based on this reproduction list are output as content data.

The contents data generated in this way are output as follows. Video contents selected as editing materials are reproduced in the assigned order, based on the respective reproduction list information, and the reproduced videos are output as edited video signals.

According to this reproduction method, only the quantity of reproduction pointer information increases based on the respective reproduction lists for the contents data prepared by a user. It is possible to supply edited video signals based on a plurality of reproduction lists, without recording a large quantity of content data in duplicate by copying the data. Therefore, it is possible to use the capacity of the recording medium efficiently.

As other reproduction method that uses such list information, there is amethod of realizing an editing of videos in a single recording medium. For example, there are a recording/reproducing apparatus and a video signal editing apparatus that use an AV file recorded with a plurality of Audio Visual (AV) data, and a Real-Time Rewritable (RTRW) management file that is recorded with a plurality of pieces of Program Chain (PGC) information that assign a plurality of sections of AV data with pointers.

In the PGC information, there are defined pieces of cell information that show divided video signals attached with pointers. Divided video contents that have been selected as editing materials from among the pieces of cell information are assigned, and are reproduced.

The management file that prescribes a method of reproducing AV data consisting of these pieces of cell information is first prescribed and reproduced according to a provisional order of user definition type PGC information. Next, when a reproduction order has been determined by a video data editing apparatus, the video contents are reproduced according to this defined data order as an updated reproduction order. The structure of this video data editing apparatus is disclosed in Japanese Patent Application Laid-open No. 11-187354, "An optical disc, a video data editing apparatus, a computer-readable recording medium recorded with an edit program, an optical disc reproducing apparatus, and a computer-readable recording medium recorded with a reproduction program".

In recent years, there has been an increase in the capacity of a recording medium to a large capacity. Along this trend, there has been introduced a style that whole house members or group members record their contents onto one recording medium. When this recording style is used, it is necessary to provide a privacy locking mechanism that prohibits users from erasing or watching the contents recorded by other individuals.

Because no consideration has been given to protect users' recorded programs from being erased or watched by other unwanted persons in the recording/reproducing apparatus in which a plurality of persons freely share a recording medium, there occurs such impermissible conduct of erasing or watching.

### SUMMARY OF THE INVENTION

According to the present invention, a reproducing apparatus has reproduction list information that assigns reproduction orders by combining pointer information showing a starting point and an ending point of specific sections of contents data recorded on a recording medium. The reproducing apparatus reproduces the content data according to the reproduction lists. In the reproducing apparatus, particularly, specific reproduction lists are recorded linked with passwords. Only when a specific password coincides with a password that is input by a user, the reproducing apparatus authenticates the password, and permits a reproduction.

Further, a recording apparatus records reproduction list information that assigns reproduction orders by combining pointer information showing a starting point and an ending point of specific sections of contents data recorded on a recording medium. In the recording apparatus, specific reproduction lists are recorded linked with passwords. Only when a specific password coincides with a password that is input by a user, the reproducing apparatus authenticates the password, and permits a reproduction.

Further, a recording medium records reproduction list information that assigns reproduction orders by combining pointer information showing a starting point and an ending point of specific sections of contents data recorded on a recording medium. In the recording medium, specific reproduction lists are recorded linked with passwords. Only when a specific password coincides with a password that is input by a user, the recording medium authenticates the password, and permits a reproduction.

In order to achieve the above object, according to a first aspect of the present invention, there is provided a video signal recording method that obtains divided-video information by dividing a supplied encoded video signal into signals of a plurality of time intervals, generates reproduction cell information that includes record starting position information relating to record starting positions of the obtained divided-video information, and records the generated reproduction cell information and the divided-video information, wherein each piece of the reproduction cell information includes permission flag information that permits a decoding of divided-video information relating to the reproduction cell information, and password information that gives a decoding permission when a decoding is not permitted, and the video signal recording method records the divided-video information and reproduction cell information onto a recording medium.

According to the above aspect of the invention, at the time of reproducing contents data based on reproduction list information supplied according to an assignment of a user, a password that locks the contents data is compared with a password supplied based on a user operation, thereby to carry out an authentication work. Only when the password has been authenticated, a reproduction operation is carried out. Therefore, it is possible to lock the contents recorded by a specific individual to protect the contents from being reproduced or erased. As a result, there is an effect that it is possible to provide a contents recording method that has a privacy locking function capable of preventing the contents from being watched or erased unexpectedly.

Further, in order to achieve the above object, according to a second aspect of the invention, there is provided a video signal reproduction method that reproduces video signals from a recording medium that has been recorded with divided-video information obtained by dividing a supplied encoded video signal into signals of a plurality of time intervals, record starting position information relating to record starting positions of the obtained divided-video information, permission flag information that permits a decoding of the divided-video information, and password information that gives a decoding permission when a decoding is not permitted, wherein the video signal reproduction method regenerates reproduction lists that assign reproduction orders of a plurality of divided pieces of video information, and reproduces the plurality of divided pieces of video information of which reproduction is permitted based on the permission flag information in the order of the reproduction lists and is also permitted based on the password information.

According to the above aspect of the invention, at the time of reproducing contents data based on reproduction list information supplied according to an assignment of a user, a password that locks the contents data is compared with a password supplied based on a user operation, thereby to carry out an authentication work. Only when the password has been authenticated, a reproduction operation is carried out. Therefore, it is possible to lock the contents recorded by a specific individual to protect the contents from being reproduced or erased. As a result, there is an effect that it is possible to provide a content reproduction method that has a privacy locking function capable of preventing the contents from being watched unexpectedly.

Further, in order to achieve the above object, according to a third aspect of the invention, there is provided a video signal recording apparatus that obtains divided-video information by dividing a supplied encoded video signal into signals of a plurality of time intervals, generates reproduction cell information that includes record starting position information relating to record starting positions of the obtained divided-video information, and records the generated reproduction cell information and the divided-video information, the video signal recording apparatus comprising: a reproduction cell information generating unit that generates the reproduction cell information including permission flag information that permits a decoding of divided-video information relating to the reproduction cell information, and password information that gives a decoding permission when a decoding is not permitted; and an information-recording unit that records the reproduction cell information and the divided-video information onto a recording medium that can be accessed at random.

According to the above aspect of the invention, at the time of reproducing contents data based on reproduction list information supplied according to an assignment of a user, a password that locks the contents data is compared with a password supplied based on a user operation, thereby to carry out an authentication work. Only when the password has been authenticated, a reproduction operation is carried out. Therefore, it is possible to lock the contents recorded by a specific individual to protect the contents from being reproduced or erased. As a result, there is an effect that it is possible to provide a contents recording apparatus that has a privacy locking function capable of preventing the contents from being watched or erased unexpectedly.

Further, in order to achieve the above object, according to a fourth aspect of the invention, there is provided a video signal reproducing apparatus that reproduces video signals from a recording medium that has been recorded with divided-video information obtained by dividing a supplied encoded video signal into signals of a plurality of time intervals, record starting position information relating to record starting positions of the obtained divided-video information, permission flag information that permits a decoding of the divided-video information, and password information that gives a decoding permission when a decoding is not permitted, the video signal reproducing apparatus comprising: a reproduction list generating unit that generates reproduction lists that assign reproduction orders of a plurality of divided pieces of video information; and an encoded-video signal decoding unit that decodes the plurality of divided pieces of video information, of which reproduction is permitted based on the permission flag information in the order of the reproduction lists generated by the reproduction list generating unit and is also permitted based on the password information.

According to the above aspect of the invention, at the time of reproducing contents data based on reproduction list information supplied according to an assignment of a user, a password that locks the contents data is compared with a password supplied based on a user operation, thereby to carry out an authentication work. Only when the password has been authenticated, a reproduction operation is carried out. Therefore, it is possible to lock the contents recorded by a specific individual to protect the contents from being reproduced or erased. As a result, there is an effect that it is possible to provide a content reproducing apparatus that has a privacy locking function capable of preventing the contents from being watched unexpectedly.

In order to achieve the above object, according to a fifth aspect of the invention, there is provided a video signal recording medium onto which reproduction cell information is recorded that includes divided-video information that is a video signal divided into signals of a plurality of time intervals, record starting position information relating to a record starting position of the divided-video information, and record ending position information, wherein the reproduction cell information includes permission flag information that permits a decoding of divided-video information relating to the reproduction cell information, and password information that gives a decoding permission when a decoding is not permitted.

According to the above aspect of the invention, at the time of reproducing contents data based on reproduction list information supplied according to an assignment of a user, a password that locks the contents data is compared with a password supplied based on a user operation, thereby to carry out an authentication work. Only when the password has been authenticated, a reproduction operation is carried out. Therefore, it is possible to lock the contents recorded by a specific individual to protect the contents from being reproduced or erased. As a result, there is an effect that it is possible to provide a contents recording medium that has a privacy locking function capable of preventing the contents from being watched or erased unexpectedly.

In order to achieve the above object, according to a sixth aspect of the invention, there is provided a video signal recording method that generates reproduction cell information that includes record starting position information relating to a record starting position of an encoded video signal that is simultaneously supplied to a plurality of users via a public transmission network, and records the generated reproduction cell information and the encoded video signal, wherein the reproduction cell information includes permission flag information that permits a decoding of video information relating to the reproduction cell information, and password information that gives a decoding permission when a decoding is not permitted, and the video signal and the reproduction cell information are recorded on a recording medium.

According to the above aspect of the invention, at the time of reproducing recorded video signals based on a user operation after the video signals have been broadcast via a public broadcasting network or transmitted via a public communication network, a password that locks the video signals is compared with a password supplied based on the user operation, thereby to carry out an authentication work. Only when the password has been authenticated, a reproduction operation or an erasing operation is carried out. Therefore, it is possible to lock the contents recorded by a specific individual to protect the contents from being reproduced or erased. As a result, there is an effect that it is possible to provide a contents recording method that has a privacy locking function capable of preventing the contents from being watched or erased unexpectedly.

According to a preferable embodiment of the invention, there is provided a video signal recording method of the above aspect, wherein when the encoded video signal that is supplied via the public transmission network is a signal attached with control information relating to a secondary utilization within a house, the reproduction cell information is recorded by including the control information relating to a secondary utilization into the reproduction cell information.

According to this aspect of the invention, when control information relating to a secondary utilization within a house is attached to a video signal that is broadcast via a public broadcasting network or transmitted via a public communication network, this control signal is recorded together with the video signal. Therefore, there is an effect that it is possible to provide a contents recording method having a privacy locking function with a further enhanced function in the reproduction of a video signal that is recorded based on a user operation.

The nature, principle and utility of the invention will become more apparent from the following detailed description when read in conjunction with the accompanying drawings.

### BRIEF DESCRIPTION OF THE DRAWINGS

In the accompanying drawings:
Fig.1 is a diagram showing a schematic structure of a personal lock recording/reproducing apparatus as a preferred embodiment of the present invention;
Fig.2 is a diagram showing an example of a reproduction method for managing contents data structured by a plurality of video signals, based on reproduction lists;
Fig.3 is a diagram showing an example of a method of reproducing contents data by setting reproduction lock areas to the contents data;
Fig.4 is a diagram showing an example of carrying out a reproduction operation by setting reproduction lock areas starting from the middle of programs;
Fig.5 is a diagram showing a structure of reproduction list information;
Fig.6 is a diagram showing an example of an entry-point information structure;
Fig.7 is a diagram showing an example of a section information structure;
Fig.8 is a diagram showing an example of a reproduction cell in a section information structure; and
Fig.9 is a diagram showing an example of a structure of a personal lock recording/reproducing apparatus according to an embodiment of the present invention.

### DESCRIPTION OF THE PREFERRED EMBODIMENTS

Preferred examples of a video signal recording method, a video signal reproduction method, a video signal recording apparatus, a video signal reproducing apparatus, and a video signal recording medium of the present invention will be explained.

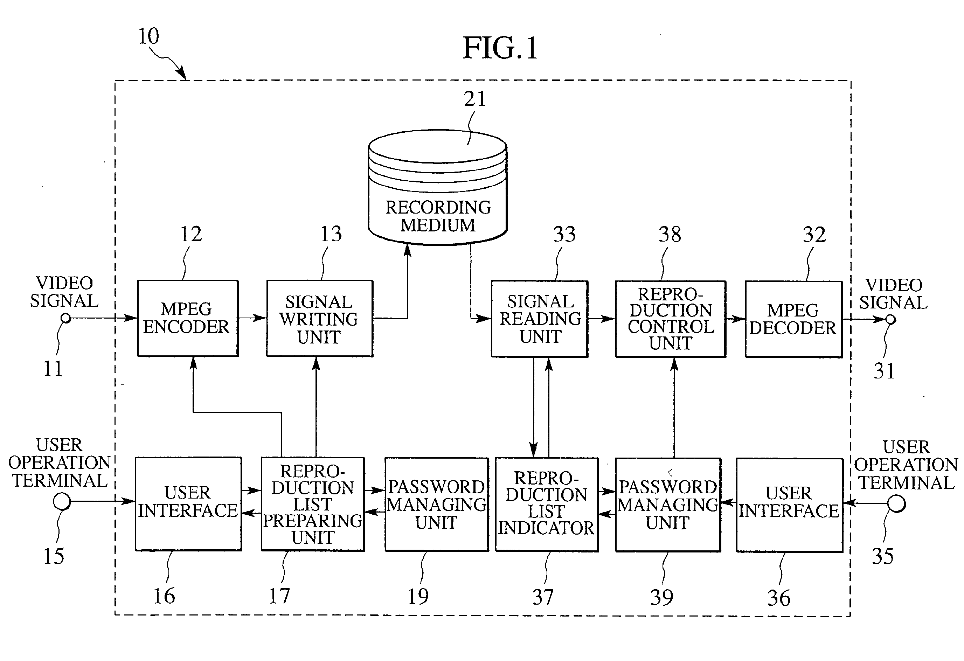

Fig.1 is a schematic block diagram of a personal lock recording/reproducing apparatus relating to the implementation of a video signal reproduction method, a video signal recording apparatus, a video signal reproducing apparatus, and a video signal recording medium of the present invention. Their structures and operations will be explained.

In Fig.1, a personal lock recording/reproducing apparatus 10 is constructed of a video signal input terminal 11, an MPEG encoder 12, a signal writing unit 13, a user operation terminal 15, a user interface 16, a reproduction list preparing unit 17, a password managing unit 19, a recording medium 21, a video signal output terminal 31, an MPEG decoder 32, a signal reading unit 33, a user operation terminal 35, a user interface 36, a reproduction list indicator 37, a reproduction control unit 38, and a password managing unit 39.

The operation of the personal lock recording/reproducing apparatus 10 having the above structure will be explained below.

First, a digital video signal converted into a digital signal is supplied to the MPEG encoder 12 via the video signal input terminal 11. The MPEG encoder 12 encodes the digital video signal according to a compression encoding system prescribed by the MPEG (moving picture experts group). An encoded signal obtained by encoding the digital video signal is supplied to the signal writing unit 13.

On the other hand, a dividing method for dividing an encoded signal obtained by encoding a signal by the MPEG encoder and recording this divided signal, is input via the user operation terminal 15. This dividing method is supplied to the signal writing unit 13. The reproduction list indicator 17 and the password managing unit 19 prepare a reproduction list signal including password management of the divided signal to be described later, based on this dividing method. This prepared reproduction list signal is also supplied to the signal writing unit 13.

The signal-writing unit 13 converts the encoded signal and the reproduction list signal supplied in this way into a signal of a format to be recorded onto the recording medium 21. An error correction signal is added to this format signal. This signal is digitally modulated, and is then supplied to the recording medium 21.

The signal recorded on the recording medium 21 is reproduced based on a user operation. This reproduction operation will be explained next.

A record portion of the video signal to be reproduced is selected with a keypad or a pointing device that is connected to the user operation terminal, based on a reproduction list that is superimposed on a screen of the video signal.

The selected reproduction list signal relating to the list portion is supplied to the reproduction list indicator 37 via the user interface 36 and the password-managing unit 39. The reproduction list indicator 37 transmits a request for reading the signal of the reproduction list portion to the signal reading unit 33. The signal reading unit 33 reads the reproduction list signal recorded on the recording medium 21. The reproduction list signal that has been read is supplied to the reproduction list indicator 37.

When a password for reproducing the reproduction list portion has been set in advance to the supplied reproduction list signal, the reproduction list indicator 37 supplies a control signal to reproduce the portion relating to the reproduction list to the signal reading unit 33, after receiving a password supplied from the user. When a password for reproducing the reproduction list portion has not been set in advance to the supplied reproduction list signal, the reproduction list indicator 37 supplies a control signal to reproduce the portion relating to the reproduction list to the signal reading unit 33, without receiving a password from the user. The signal reading unit 33 reads the encoded digital video signal that has been recorded on the recording medium, and supplies the read signal to the reproduction control unit 38.

In the reproduction control unit 38, the digital video signal set with a password is kept in a still status until when a password has been supplied and authenticated. After the password has been authenticated, the supplied digital video signal is supplied to the MPEG decoder 32. When the digital video signal has not been set with a password, the supplied digital video signal is supplied to the MPEG decoder 32 without a still status.

The MPEG decoder 32 decodes the compressed encoded digital video signal to obtain a digital video signal, and supplies this obtained digital video signal to a monitor TV not shown connected to the video signal output terminal 31. The monitor TV displays the digital video signal with sound based on the attached sound signal.

When there is no setting of a password, the recorded digital video signal that has been divided for each list is recorded directly onto the recording medium, based on reproduction list information attached to each divided video signal. When there is a setting of a password, the recorded digital video signal that has been divided for each list is recorded onto the recording medium after the authentication of the password, based on reproduction list information attached to each divided video signal.

A reproduction list that is used to carry out a divided recording of the video signal will be explained next.

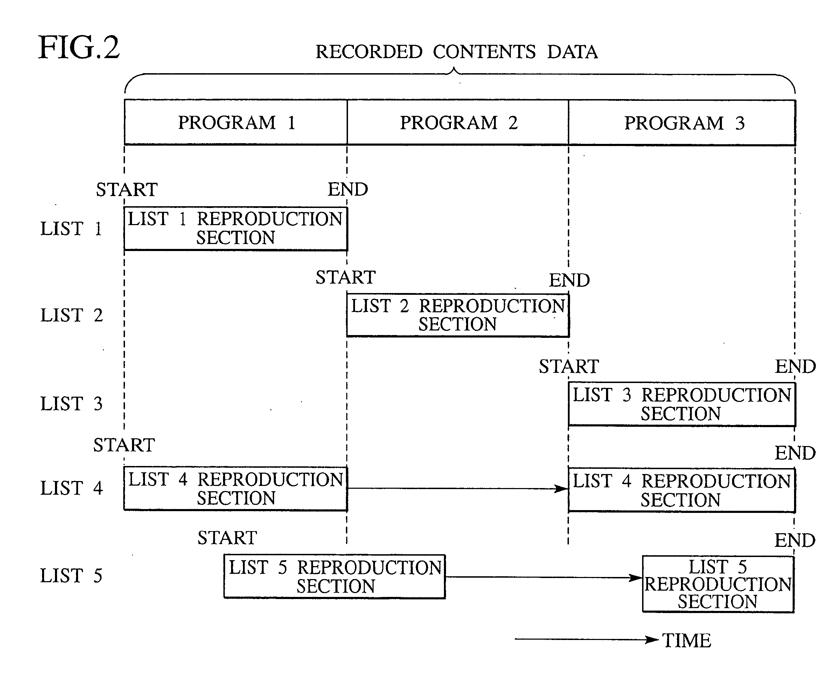

Fig.2 shows a method of reproducing content data constructed of a plurality of recorded video signals, by managing the content data based on reproduction lists.

In Fig.2, the contents are continuously recorded as a program 1, a program 2, and a program 3. A list 1 to a list 5 is used to reproduce these programs.

The list 1 assigns a first portion of the program 1 as a starting position (start) and assigns an ending portion of the program 1 as an ending position (end). Based on these assignments, the program 1 is reproduced as a list 1 reproduction portion.

Similarly, the list 2 assigns a section from a starting position (start) of the program 2 to an ending position (End) of the program 2 as a list 2 reproduction portion. Similarly, the list 3 assigns a section from a starting position (start) of the program 3 to an ending position (End) of the program 3 as a list 3 reproduction portion.

These lists 1 to 3 are the lists used to reproduce the programs 1 to 3 respectively. The list 4 is a list used to reproduce the program 1 from the start to the end of this program, and thereafter reproduce the program 3 from the start to the end of this program. The list 5 is a list used to reproduce the programs 1 and 2 from the middle of the program 1 to the middle of the program 2, and thereafter reproduce the program 3 from the middle to the end of this program.

As explained above, when continuous information like an Audio Visual (AV) signal is transmitted, this AV signal is divided into a plurality of blocks, and list information is prepared for the signal of each block. Blocks to be reproduced and the order of reproducing these blocks are defined, based on the list information prepared in this way.

It is possible to reproduce the AV signal by assigning predetermined positions of the divided AV signal, based on the list information. A method of carrying out the reproduction based on flags recorded by a user or based on the control of an encryption processing will be explained next.

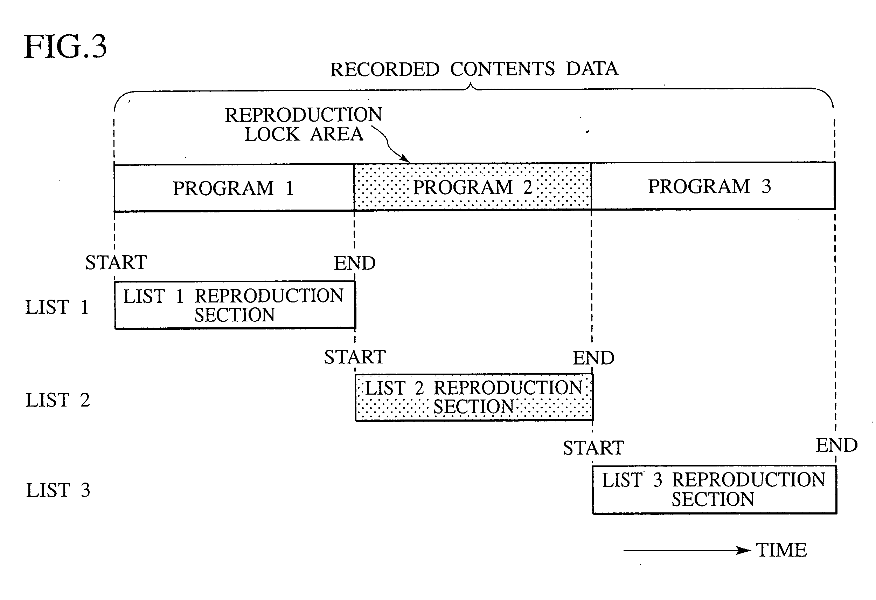

Fig.3 shows a status of controlling a reproduction of recorded contents data using a password. The reproduction operation will be explained.

In Fig. 3, a program 1 to a program 3 is recorded as recorded content data, in a similar manner to that explained above. Fig.3 shows a status that the reproduction of the program 2 is locked with a password, as indicated by a dotted area for the program 2.

The reproduction locking based on a password is carried out as follows. A header signal having a lock flag is recorded on the header of the program 2. When the flag information is "0", t this shows an unlocked status, and when the flag information is "1", this shows a locked status. In this case, the lock flag of the program 2 is "1".

The program 2 that has a lock flag "1" is reproduced only when a password has been input that is the same as the password for the reproduction of the program 2 that has been set to the program 2 together with the lock flag. The program 2 is not reproduced when this password has not been input.

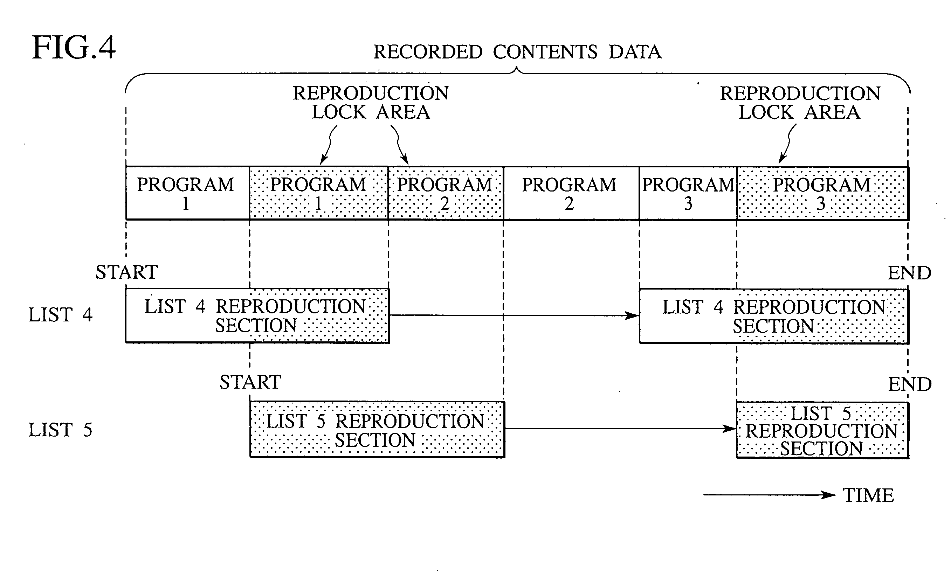

Fig.4 shows a reproduction operation when a reproduction lock area is set to an area starting from the middle of a program.

In Fig.4, a reproduction lock area is set to an area from the middle to the end of a program 1, another reproduction lock area is set to an area from the start to the middle of a program 2, and the other reproduction area is set to an area from the middle to the end of a program 3.

Assume that a recorded program to which a reproduction lock area has been set in the area starting from the middle of this program is to be reproduced, as shown in a list 4, for example. In this case, the program 1 is reproduced starting from the starting position of this program. The authentication of a password is awaited when the starting position of the reproduction lock area in the middle of the program 1 is reached. The reading of contents from the recording medium is suspended, and a still image is supplied as a video signal output from the MPEG decoder 32.

When a password has been supplied from the operation unit connected to the user operation terminal 35 and this password has been authenticated, the reproduction of the program I is restarted from this reproduction lock area. After the reproduction of the program 1 has been finished, the program 3 is reproduced next. The authentication of a password is necessary when the reproduction lock area of the program 3 is reached. When the password that has been set to the program 3 is the same as the password that is set to the middle of the program 1, the reproduction of the program 3 is continued without a need for the authentication work again.

The reproduction area according to the list 4 is reproduced in the above manner. The reproduction operation according to the list 5 is also similar to the above. The reproduction lock area starting from the middle of the program 1 is the reproduction area according to the list 5. Therefore, the password authentication processing is carried out at the beginning. When a password has been authenticated, the programs are reproduced up to the middle of the program 2, and the reproduction of the program 3 is continued starting from the middle of this program.

In this case, when the password set to the middle of the program 1 is the same as the password set to the starting portion of the program 2, the reproduction of the program 2 is started immediately after finishing the reproduction of the program 1.

As explained above, it is possible to start or finish the reproduction of a program in the middle of the program. In the above operation, recorded contents data is divided into reproduction cells each having predetermined interval. A header signal has reproduction list information of each reproduction cell. A reproduction lock flag is defined in this header, and this flag indicates a lock area.

A method of describing the reproduction list information relating to the assignment of the lock area will be explained next.

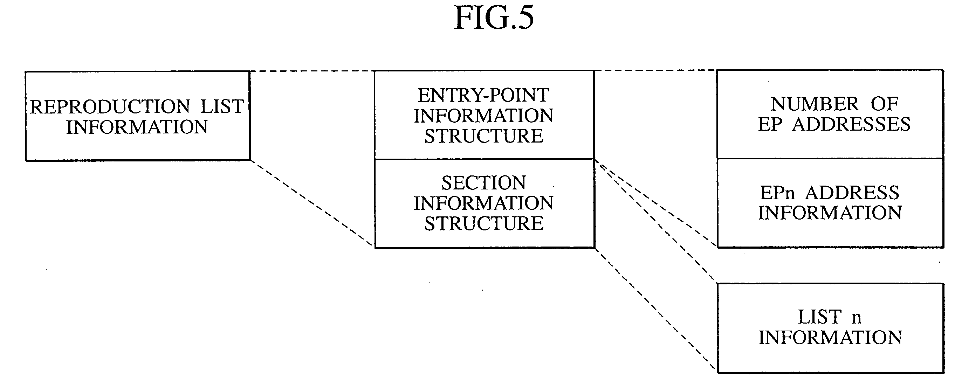

Fig.5 shows a structure of reproduction list information.

As shown in Fig.5, the reproduction list information has two structures of an entry-point information structure and a section information structure.

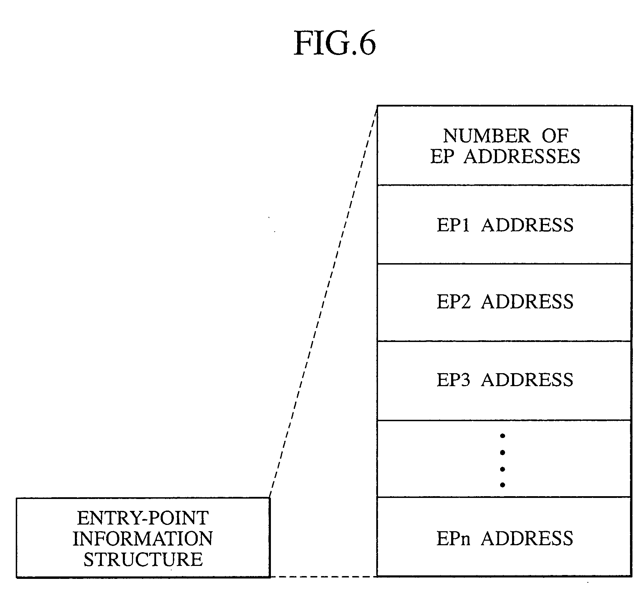

Fig.6 shows an entry-point information structure.

In Fig.6, the entry-point information structure is constructed of a number n of entry point (EP) addresses, and n addresses EPi (i = 1 to n).

The addresses in the EPn information structure are relative addresses from the header of VBV buffer information that show storage positions of the EPn information stored in a video buffering verifier (VBV) that temporarily stores encoded data when the MPEG encoder has decoded a video signal.

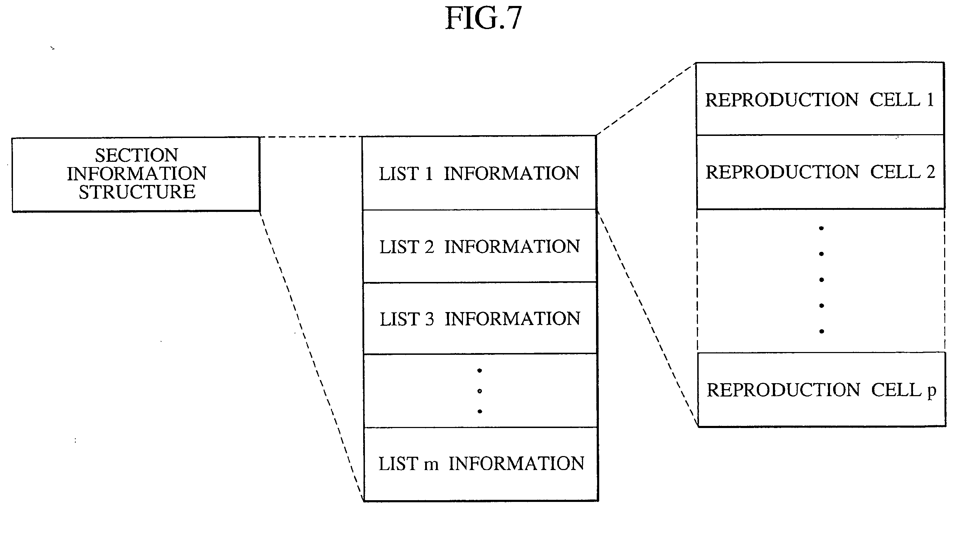

Fig.7 shows a section information structure.

The section information structure is reproduction list information that is described adjacent to the entry-point information structure. The section information structure describes list 1 information to list **m** information.

One list information, for example, list 1 information, is constructed of a reproduction cell 1 to a reproduction cell **p** (where **p** is a natural number).

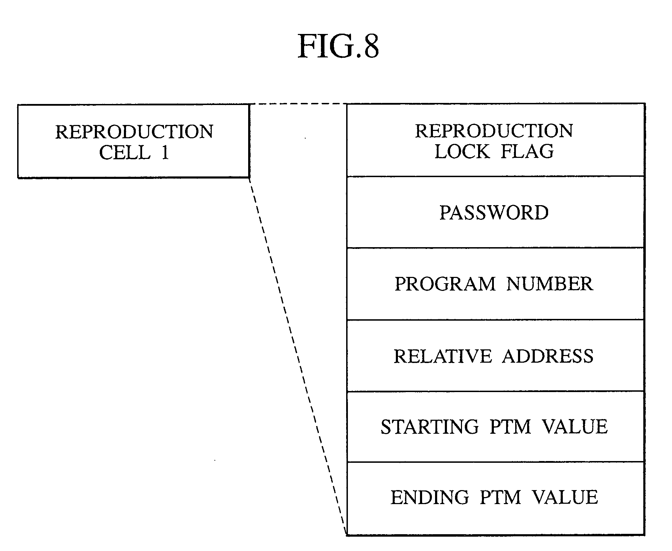

Fig.8 shows a structure of this reproduction cell.

Data stored in the reproduction cell 1 shown in Fig.8 includes a reproduction lock flag, a password, a program number, a relative address, and a starting PTM value, an ending PTM value. This structure is similar to that of each of the reproduction cell 2 to the reproduction cell **p**.

Among these pieces of information, the relative address is a relative address of a header position of recorded content data to be recorded. This relative address is described in the unit of byte or sector, for example.

The starting PTM value and the ending PTM value described after the relative address are time stamps that are recorded in the clock frequency of 90 kHz or 27 MHz in the system standard of the MPEG (multiplexing standard). In the MPEG standard, they are called PTS (Presentation Time tamp) and DTS (Decoding Time Stamp).

In the example shown, DTS is recorded as time information of content data information that is encoded by compression. This DTS is recorded at the rate of one for one picture (an image of one frame) of a video signal. For example, in the case of a video signal according to the NTSC (national television-system committee color television system), the DTS is recorded at an interval of 3003 clocks for a signal of 90 kHz clock frequency.

Therefore, it is possible to assign an entry point to a video signal for each one-picture signal. In other words, it is possible to assign a starting point or an ending point of a video in each one-frame unit. It becomes possible to assign a reproduction lock area in this time unit.

For storing a password that is used to assign a reproduction lock area, there is a method of storing eight characters according to ASCII code in an eight-byte password area. There is also the following method. Five-digit numbers from 00000 to 99999 are input using ten-keys, and this input number is divided by a hexadecimal number, for example, 0x10000. The surplus 0x0000 to 0xFFFF obtained is stored in a password area as a two-byte number.

There has been explained above the structure and the operation of the personal lock recording/reproducing apparatus that records an AV signal by assigning a reproduction lock area, and reproduces the signal of the recorded reproduction lock area after authenticating a password. Further, there has been explained the structure of a head signal for managing the lock area. The structure and the operation of the personal lock recording/reproducing apparatus will be explained in further detail below.

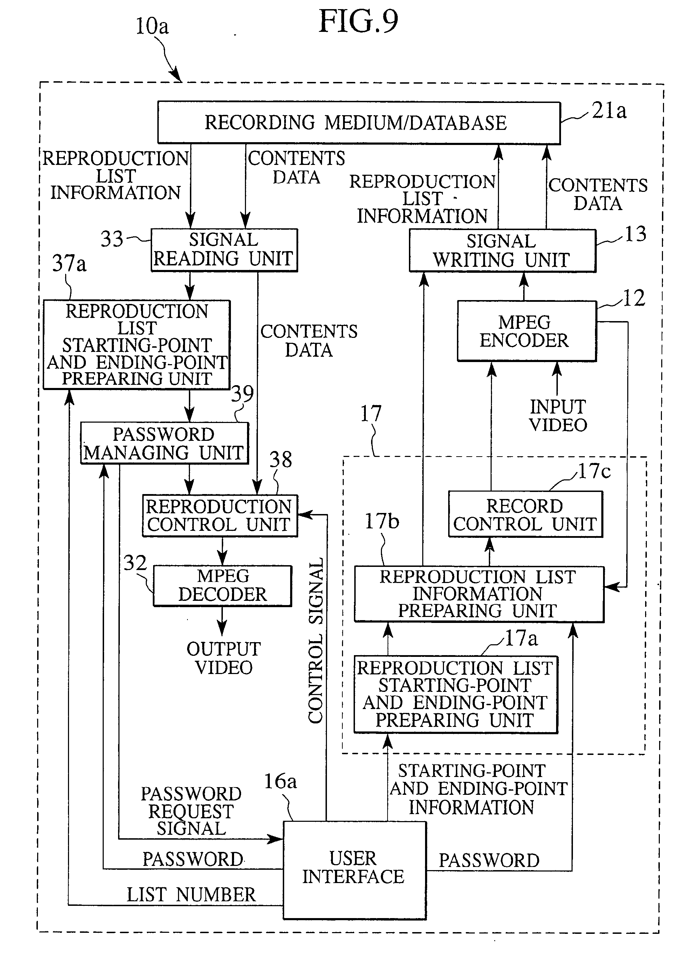

Fig.9 shows a further detailed structure of a personal lock recording/reproducing apparatus.

A personal lock recording/reproducing apparatus 10a is constructed of an MPEG encoder 12, a signal writing unit 13, a user interface 16a, a reproduction list starting-point and ending-point preparing unit 17a, a reproduction list information preparing unit 17b, a record control unit 17c, a recording medium/database 21a, an MPEG decoder 32, a signal reading unit 33, a reproduction list starting-point and ending-point indicating unit 37a, a reproduction control unit 38, and a password control unit 39.

The operation of the personal lock recording/reproducing apparatus 10a having the above structure will be explained next.

First, a user assigns an area of an AV signal to be recorded, with a pointing device or the like not shown that is connected to the user interface 16a. A signal that shows FREE to this area is reproduced as starting-point and ending-point information, and this reproduced signal is supplied to the reproduction list starting-point and ending-point preparing unit 17a.

The signal showing FREE that has been supplied to the reproduction list starting-point and ending-point preparing unit 17a is further supplied to the reproduction list information preparing unit 17b. The signal showing FREE that has been supplied to the reproduction list information-preparing unit 17b is further supplied to the record control unit 17c.

After obtaining the supplied signal showing FREE, the record control unit 17c supplies a control signal to start the encoding of the supplied input video signal to the MPEG encoder 12.

The MPEG encoder 12 starts encoding the supplied input video, and supplies the obtained encoded signal to the signal writing unit 13. A time stamp of the encoding starting time obtained according to a method prescribed by the MPEG system standard is generated as a starting PTM value, and a time stamp generated at the encoding ending time is generated as an ending PTM value, for this encoded signal respectively. The generated PTM values are supplied to the reproduction list information-preparing unit 17b.

The PTM values supplied to the reproduction list information-preparing unit 17b are addresses from the start position of the compressed data at the encoding starting time. In other words, these PTM values are relative addresses, and they are expressed in byte or sector when the signal is recorded onto a disc medium.

The addresses that have been generated and supplied to the reproduction list information-preparing unit 17b in this way are supplied to the signal writing unit 13. The encoded signal and the reproduction list information including the PTM values that have been supplied to the signal writing unit 13 are supplied to the recording medium/database 21a, and are then recorded onto the recording medium that is incorporated in this recording medium/database 21a.

This recording medium is a hard disc or a DVD-RAM that can be access at random. Reproduction list information is added as a header signal to the contents data that has been divided for each reproduction cell, and the contents data added with this header signal is recorded onto this recording medium.

The contents data added with this header signal are recorded onto the recording medium in a method corresponding to a file system. When it is possible to record the content data and the header signal as two independent files, these may be recorded onto the two files as separate file signals.

A method of assigning a reproduction lock area of the recorded contents data by using list information will be explained next.

In assigning relative times of the contents by using the list information, the user interface 16a may assign all contents of the program 1. Alternatively, a graphic interface like a search screen not shown may reproduce the contents in a simple manner, and a user assigns a starting point and an ending point of the recorded contents. In both cases, the starting-point and ending-point information is supplied to the reproduction list starting-point and ending-point preparing unit 17a.

The reproduction list starting-point and ending-point preparing unit 17a converts the supplied starting-point and ending-point information of the contents into signals of a description method according to the formats shown in Figs.5 to 8. The user assigns whether a password is to be set or not to the contents data divided into the reproduction cells, via the user interface 16a.

When the user has operated that a password is to be used, information relating to the password to be added is supplied to the reproduction list information preparing unit 17b. A reproduction lock flag of a corresponding reproduction list is set to "1", for example. The reproduction list information generated in this way is supplied to the signal writing unit 13.

The content data and the reproduction list information supplied to the signal writing unit 13 are recorded onto the recording medium. When there is reproduction list information that has been already recorded as reproduction list information, the recorded contents are updated, and the updated contents are recorded.

The content data and the reproduction list information are recorded onto the recording medium in this way. A method of reproducing the recorded data, particularly, a method of reproducing the contents data set with a reproduction lock flag will be explained next.

First, the recording medium/database 21a reproduces the contents data and the reproduction list information recorded on the recording medium, and supplies the reproduced signals to the signal reading unit 33.

The signal reading unit 33 reads the reproduction list information and the contents data from the recording medium/database 21a. The read signals are displayed on a display unit not shown.

A reproduction list number desired by a user is obtained via the user interface 16a based on the contents displayed on the display unit. The obtained reproduction list number is supplied to the reproduction list starting-point and ending-point preparing unit 37a.

The reproduction list starting-point and ending-point preparing unit 37a obtains entry point addresses of a starting portion and an ending portion relating to the reproduction list number, based on the supplied reproduction list number. Files recorded on the recording medium are accessed and are reproduced, based on the obtained addresses.

Target section information is described in this reproduced file information. A signal for starting a reproduction from the header reproduction cell of the list information is supplied to the password-managing unit 39.

The password-managing unit 39 judges whether the reproductions lock flag at the header of the reproduction cell is "0" or "1". When this reproduction lock flag is "1", the password-managing unit 39 supplies a password request signal for requesting a supply of the password, to the user interface 16a.

When the password request signal has been supplied, the user interface 16a supplies a control signal of a reproduction pause to the reproduction control unit 38. The reproduction control unit 38 pauses the reproduction of contents from the recording medium, based on the control signal. At the same time, the reproduction control unit 38 supplies a reproduction mode change over signal for changing a moving-picture mode to a still-image reproduction mode, to the MPEG decoder 32.

The user recognizes that the password request signal has been supplied in this way. When a password signal obtained via the user interface 16a operated by a user is supplied, the supplied password signal is supplied to the password-managing unit 39. The password managing unit 39 compares the supplied password with the password described in the reproduction cell area. When coincidence of the passwords has been authenticated, the MPEG decoder 32 restarts the decoding of the reproduction signal from the reproduction cell.

When coincidence of the passwords has not been authenticated, the MPEG decoder 32 skips the content data of the corresponding reproduction cell after a lapse of a predetermined period of time. The MPEG decoder 32 then decodes the content data relating to the reproduction cell to which a password has not been added. The personal lock recording/reproducing apparatus 10a supplies an output video that has been obtained by this decoding.

As explained above, when a password has not been authenticated, only the video signal of which reproduction has been permitted without the setting of a password, is supplied to the MPEG decoder 32 in the personal lock recording/reproducing apparatus 10a. The output video signal obtained by the decoding is displayed on the monitoring unit not shown. The user watches this video.

The structure and the operation of the personal lock recording/reproducing apparatus have been explained above. This personal lock recording/reproducing apparatus divides a video signal into predetermined sections. For each divided video signal, reproduction permission information or reproduction permission password information is included in reproduction cell information that includes record starting position information, and this information is recorded. Based on this arrangement, the personal lock recording/reproducing apparatus limits the watching and erasing of the recorded information.

When a video signal is to be recorded automatically like a reserved recording of a program, it becomes impossible to assign a specific position to the recorded video signal. Information that limits watching and erasing is added to the whole program to be recorded.

In the above case, the information that limits watching and erasing is held as the information relating to a first position of the video signal from which the recording is started. This information becomes .valid until when the series of the program recording operation have been finished.

As a method of dividing a program to be recorded, there is the following method as an example. A commercial inserted in a broadcasting program is detected. New reproduction cell information is recorded at a position where the broadcasting continues following this commercial, as a division point. This reproduction cell information includes record starting position information, and information that limits watching and erasing.

However, when this broadcasting program is in a stereo sound mode and it is not possible to detect a commercial position, or when the program does not include a commercial broadcasting, it is not possible to divide the series of recorded program. In this case, the program is recorded as one program from the record starting position to the record ending position. The reproduction cell information is generated relating to only the record starting position of the program.

When a person who records the program recognizes that the watching limit or the erasing limit is provided to the recording or reproduction of the whole program to which one reproduction cell information is added, this person can cancel these limits after watching the program or can erase the recorded program. With this arrangement, this person can effectively record the recorded area of the recording medium with small hindrance.

The video signal relating to the watching limit or the erasing limit of this embodiment is applied to various kinds of programs supplied via public transmission lines. These programs include programs that are broadcast via broadcasting networks, programs that are transmitted via a medium like a communication satellite, programs relating to CATV that are transmitted via communication paths like coaxial cables and optical cables, and Internet broadcastings that are supplied to a large number of users on the Internet.

At present, in relation to the copyrights of video signals that are supplied via the public transmission lines, there has been no special management opinion relating to a secondary utilization of the copyrights of the video signal suppliers like the recording of the video signals at home. Users are permitted to record the supplied video signals with VTRs reproduce the recorded video signals by time shifting, and watch the video signals.

As explained above, at present, there has been no limit to the second utilization at home of video signals that are supplied via public transmission lines. However, when time-shift watching at home are prohibited to some broadcastings or communications in future, it becomes necessary to record video signals including the information relating to the secondary utilization of the video signals at home.

When a video signal recording apparatus is introduced to the market after such secondary utilization at home has been legalized, the video signal recording apparatus carries out the recording to meet this prohibition law, using the video signals that are transmitted together with the secondary utilization prohibition information. However, the recording apparatus that has been introduced to the market before this legalization cannot meet this requirement.

When a transmission environment has come to be arranged that enables contents providers to broadcast or communicate the contents by providing information bits to the contents that prohibit the secondary utilization of the contents at home or not, users can continuously use the video signal recording apparatus at home with relief in future.

It is possible to realize this video signal recording/reproducing apparatus as follows. For example, a one-bit flag recording area relating to the opinion of the right of the contents is provided in the signal format of the reproduction cell shown in Fig.8. Permission or prohibition information supplied from the content supplier is recorded in this one-bit flag recording area.

Based on this arrangement, it becomes possible to legally record and reproduce the contents corresponding to a new regulation on the contents when this is legalized in future. The content suppliers can continuously supply suitable contents.

On the other hand, when a non-encrypted video signal for which there is no particular opinion on the right relating to the secondary utilization of the contents at home, is supplied, a user can record the video signal of which recording has been permitted. In this situation, it is possible to prevent the recorded contents from being watched or erased undesirably by other users, by using reproduction cell information.

When a particular user sets the watching limit or the erasing limit, the recording apparatus and the reproducing apparatus in the recording/reproducing apparatus need not be common apparatuses. For example, a home server that is connected to a home bus may be the recording apparatus, and a terminal unit disposed in each room may be the reproducing apparatus. It may be structured such that a certain individual records the contents attached with a reproduction lock flag via the network, and only this special individual can watch or erase the recorded contents.

In addition to this network as a home LAN, it may be also arranged such that a special individual contracts with a service provider, and records the individual' s contents onto a contents recording apparatus of this service provider. The special individual can protect the recorded contents from being watched or erased by other users.

As explained above, it is possible to provide methods of recording/reproducing contents, a recording/reproducing apparatus, and a contents recording medium having the privacy lock function as follows. A video signal like a broadcasting signal that is simultaneously transmitted to a plurality of users is divided. Reproduction list information is attached to each video signal obtained by this dividing. This reproduction list information includes entry point information that specifies a recording section, reproduction lock flag information, and password information for canceling the reproduction lock. The contents data recorded with this reproduction list information are reproduced according to the reproduction list information supplied based on a user's assignment. A password of the contents data that has been locked with a reproduction lock flag is compared with a password supplied from the user. Only when the password has been authenticated based on this comparison, the reproduction operation is carried out. Therefore, it is possible to lock the contents recorded by a special individual from being reproduced or erased. In this way, the privacy lock function can prevent the contents from being watched and erased unnecessarily.

It should be understood that many modifications and adaptations of the invention will become apparent to those skilled in the art and it is intended to encompass such obvious modifications and changes in the scope of the claims appended hereto.

## Claims

1. A video signal recording method that obtains divided-video information by dividing a supplied encoded video signal into signals of a plurality of time intervals, generates reproduction cell information that includes record starting position information relating to record starting positions of the obtained divided-video information, and records the generated reproduction cell information and the divided-video information, wherein
each piece of the reproduction cell information includes permission flag information that permits a decoding of divided-video information relating to the reproduction cell information, and password information that gives a decoding permission when a decoding is not permitted, and the video signal recording method records the divided-video information and reproduction cell information onto a recording medium.

2. A video signal reproduction method that reproduces video signals from a recording medium that has been recorded with divided-video information obtained by dividing a supplied encoded video signal into signals of a plurality of time intervals, record starting position information relating to record starting positions of the obtained divided-video information, permission flag information that permits a decoding of the divided-video information, and password information that gives a decoding permission when a decoding is not permitted, wherein
the video signal reproduction method regenerates reproduction lists that assign reproduction orders of a plurality of divided pieces of video information, and reproduces the plurality of divided pieces of video information of which reproduction is permitted based on the permission flag information in the order of the reproduction lists and is also permitted based on the password information.

3. A video signal recording apparatus that obtains divided-video information by dividing a supplied encoded video signal into signals of a plurality of time intervals, generates reproduction cell information that includes record starting position information relating to record starting positions of the obtained divided-video information, and records the generated reproduction cell information and the divided-video information, the video signal recording apparatus comprising:
a reproduction cell information generating unit (17) that generates the reproduction cell information including permission flag information that permits a decoding of divided-video information relating to the reproduction cell information, and password information that gives a decoding permission when a decoding is not permitted; and
an information-recording unit (13) that records the reproduction cell information and the divided-video information onto a recording medium (21) that can be accessed at random.

4. A video signal reproducing apparatus that reproduces video signals from a recording medium (21) that has been recorded with divided-video information obtained by dividing a supplied encoded video signal into signals of a plurality of time intervals, record starting position information relating to record starting positions of the obtained divided-video information, permission flag information that permits a decoding of the divided-video information, and password information that gives a decoding permission when a decoding is not permitted, the video signal reproducing apparatus comprising:
a reproduction list generating unit (37) that generates reproduction lists that assign reproduction orders of a plurality of divided pieces of video information; and
an encoded-video signal decoding unit (32) that decodes the plurality of divided pieces of video information, of which reproduction is permitted based on the permission flag information in the order of the reproduction lists generated by the reproduction list generating unit and is also permitted based on the password information.

5. A video signal recording medium (21) onto which reproduction cell information is recorded that includes divided-video information that is a video signal divided into signals of a plurality of time intervals, record starting position information relating to record starting positions of the divided-video information, and record ending position information, wherein
the reproduction cell information includes permission flag information that permits a decoding of divided-video information relating to the reproduction cell information, and password information that gives a decoding permission when a decoding is not permitted.

6. A video signal recording method that generates reproduction cell information that includes record starting position information relating to a record starting position of an encoded video signal that is simultaneously supplied to a plurality of users via a public transmission network, and records the generated reproduction cell information and the encoded video signal, wherein
the reproduction cell information includes permission flag information that permits a decoding of video information relating to the reproduction cell information, and password information that gives a decoding permission when a decoding is not permitted, and the video signal and the reproduction cell information are recorded on a recording medium (21).

7. A video signal recording method according to claim 6, wherein when the encoded video signal that is supplied via the public transmission network is a signal attached with control information relating to a secondary utilization within a house, the reproduction cell information is recorded by including the control information relating to a secondary utilization into the reproduction cell information.
